# DEMANDE DE BREVET EUROPEEN

(11) **EP 4 462 416 A1**
(43) Date de publication de la demande: **13.11.2024**
(21) Numéro de dépôt: 24173017.5
(22) Date de dépôt: 29.04.2024
(51) Int. Cl.: G09G 3/34, G09G 3/36

(54) **CONTROLE DE LA LUMINOSITE D'UN ECRAN**

(30) Priorité: 11.05.2023 FR 2304677
(71) Demandeur: STMicroelectronics International N.V., 1228 Plan-les-Ouates, Geneva (CH)
(72) Inventeur: LEMARCHAND, Olivier, 38000 GRENOBLE (FR); GAFFET, Ulysse, 38000 GRENOBLE (FR); VASSAL, Robin, 38100 GRENOBLE (FR)
(74) Mandataire: Cabinet Beaumont

(57) **Abrégé**

La présente description concerne un système comprenant :
- un microcontrôleur (106) comprenant un réseau de neurones (120) ;
- un capteur à temps de vol (104) configuré pour effectuer une capture d'une scène comprenant un utilisateur, et comprenant une pluralité de pixels, la capture comprenant, pour chaque pixel, la mesure d'une distance à l'utilisateur et d'une valeur de signal, le capteur étant en outre configuré pour calculer une valeur d'écart type associé à la valeur de distance et une valeur d'écart-type associé à la valeur de signal et une valeur de confiance, le capteur étant en outre configuré pour fournir les valeurs au réseau,
le réseau étant configuré pour générer, sur la base des valeurs, une estimation d'une direction associée à l'utilisateur, le système comprenant en outre un écran (102), le microcontrôleur étant configuré pour contrôler l'écran, ou un autre circuit, sur la base de l'estimation.

## Description

### Domaine technique

La présente description concerne le contrôle de la luminosité d'un écran par l'exploitation de données acquises par un capteur à temps de vol.

### Technique antérieure

Le contrôle de luminosité d'écrans permet de réduire leur consommation en énergie. De manière générale, le contrôle s'effectue par surveillance, par l'intermédiaire d'une caméra, généralement par l'intermédiaire de la webcam implémentée sur l'écran, de l'orientation de la tête de l'utilisateur. La caméra est configurée pour détecter lorsque l'utilisateur regarde vers une autre direction que l'écran et la luminosité de l'écran est alors diminuée, mettant par exemple l'écran en veille de manière automatique. La caméra est aussi configurée pour détecter lorsque l'utilisateur revient face vers l'écran et la luminosité de l'écran est alors augmentée.

Cependant, en fonctionnant même lorsque l'écran est dans un fonctionnement réduit et/ou lorsque l'utilisateur n'est par exemple plus devant son écran, l'usage de la caméra compromet la confidentialité de l'utilisateur. De plus, la caméra étant un périphérique coûteux en consommation d'énergie, l'économie d'énergie réalisée par la diminution de la luminosité est contrecarrée par la consommation énergétique de la caméra.

Il existe un besoin d'améliorer les méthodes d'adaptation automatique de la luminosité d'un écran. En particulier, il est souhaitable de que la mise en oeuvre de contrôle de la luminosité ne soit pas énergivore. Il est de plus souhaitable que la mise en oeuvre de contrôle de la luminosité ne compromette pas la confidentialité de l'utilisateur.

### Résumé de l'invention

Un mode de réalisation prévoit un système comprenant :
- un microcontrôleur comprenant un réseau de neurones ;
- un capteur à temps de vol, relié au microcontrôleur, configuré pour effectuer une première capture d'une scène image comprenant un utilisateur, le capteur comprenant une pluralité de pixels, la première capture comprenant la mesure, par chaque pixel d'une distance à l'utilisateur du système et d'une valeur de signal correspondant à un nombre de photon revenant vers le capteur par unité de temps, le capteur étant en outre configuré pour, suite à la première capture et pour chaque pixel, calculer une valeur d'écart type associé à la valeur de distance et une valeur d'écart-type associé à la valeur de signal et une valeur de confiance, le capteur étant en outre configuré pour fournir, en association à chaque pixel, les valeurs de distance, de signal, d'écarts-type associés à la distance et au signal et la valeur de confiance au réseau de neurones,
le réseau de neurones étant configuré pour générer, sur la base des valeurs fournies par le capteur, une estimation d'une direction associée à l'utilisateur, le système comprenant en outre un écran, relié au microcontrôleur, le microcontrôleur étant configuré pour contrôler l'écran, ou un autre circuit relié au microcontrôleur, sur la base de l'estimation de la direction associée à l'utilisateur.

Selon un mode de réalisation, le microcontrôleur est en outre configuré pour générer une valeur d'attention associée à l'utilisateur, et le microcontrôleur est configuré pour contrôler la luminosité de l'écran en outre sur la base de la valeur d'attention.

Selon un mode de réalisation, chaque pixel du capteur est en outre configuré pour mesurer une valeur de réflectance et le réseau de neurones est configuré pour générer l'estimation de la direction en outre sur la base des valeurs de réflectance.

Selon un mode de réalisation, le système ci-dessus comprend en outre une mémoire comprenant un programme applicatif et le microcontrôleur est en outre configuré pour commander l'exécution du programme applicatif sur la base de l'estimation de la direction générée par le réseau de neurones.

Selon un mode de réalisation, le système ci-dessus comprend en outre une unité de rétro-éclairage (BLU- « Back Light Unit »), et le microcontrôleur est configuré pour désactiver l'unité de rétro-éclairage, sur la base de l'estimation de la direction.

Selon un mode de réalisation, le microcontrôleur est configuré pour contrôler un taux de rafraîchissement de l'écran sur la base de l'estimation de la direction.

Selon un mode de réalisation, le capteur est configuré pour effectuer, suite à la première capture, une deuxième capture, l'intervalle de temps entre les premières et deuxième capture étant déterminé par l'estimation de la direction générée par le réseau de neurones et/ou sur la base de la valeur d'attention calculée suite à la première capture.

Selon un mode de réalisation, le capteur est un capteur de 8x8 pixels.

Selon un mode de réalisation, le système ci-dessus comprend en outre au moins un autre écran, le microcontrôleur étant en outre configuré pour contrôler la luminosité de l'au moins autre écran sur la base de l'estimation d'une direction associée à l'utilisateur.

Selon un mode de réalisation, la direction estimée indique une direction, décrivant l'orientation de la tête de l'utilisateur, parmi les direction nord, nord-est, nord-ouest, est, ouest et sud, la direction nord indiquant que l'utilisateur est face à l'écran et la direction sud indiquant que l'utilisateur est dos à l'écran.

Selon un mode de réalisation, le microcontrôleur est configuré pour commander la diminution de la luminosité de l'écran lorsque entre au moins deux captures successives, la direction estimée passe :
- de nord à nord-ouest ou à nord-est ; et/ou
- de nord à sud ; et/ou
- de nord-ouest ou nord-est à sud,
et le microcontrôleur est configuré pour commander l'augmentation de la luminosité de l'écran lorsque entre au moins deux captures successives, la direction estimée passe :
- de sud à nord ; et/ou
- de sud à nord-ouest ou de sud à nord-est ; et ou
- de nord-ouest ou nord-est à nord.

Selon un mode de réalisation, la valeur de confiance est une valeur booléenne indiquant si les mesures effectuées par le pixel permettent de détecter l'utilisateur, le capteur est configuré pour ne pas fournir les mesures prise par un pixel ne détectant pas l'utilisateur au réseau de neurones.

Selon un mode de réalisation, le réseau de neurones comprend :
- au moins une couche de convolution ; et
- au moins une couche dense.

Un mode de réalisation prévoit un procédé d'apprentissage d'un réseau de neurones comprenant :
- la capture, par un capteur à temps de vol d'une pluralité de scène image comprenant un utilisateur d'un écran, chaque pixel mesurant une valeur de distance à l'utilisateur, une valeur de signal et étant configuré pour calculer un écart type associé à la valeur de distance et un écart-type associé à la valeur de signal ;
- la suppression, par un processeur, dans les images capturés, d'images aberrantes ;
- la classification, par le processeur, de chaque image non supprimée, dans une classe parmi les classes nord, nord-ouest, nord-est, ouest, est et sud ;
- l'équilibrage, par le processeur, du nombre d'images répartie dans chaque classe ;
- la sélection, par le processeur, d'une architecture d'un réseau de neurones ; et
- l'entrainement du réseau de neurones sur la base des image capturées et classifiées et sur la base des valeurs mesurées pour chaque pixel des images, l'entrainement comprenant la recherche de paramètres pour le réseau de neurones sélectionné.

Un mode de réalisation prévoit un procédé comprenant :
- la capture, par un capteur à temps de vol, d'une scène image comprenant un utilisateur d'un écran, la capture comprenant la mesure, par chaque pixel du capteur, d'une valeur de distance, d'une valeur de signal et de valeurs d'écarts-type associées à la valeur de distance et à la valeur de signal, le capteur étant en outre configuré pour générer, pour chaque pixel, un valeur de confiance ;
- la fourniture, par le capteur, à un microcontrôleur des mesures effectuées par les pixels, le microcontrôleur comprenant un réseau de neurones configuré pour estimer, sur la base des mesures fournies, une direction décrivant l'orientation de la tête de l'utilisateur ;
- le contrôle, par le microcontrôleur de l'écran ou d'un autre circuit relié au microcontrôleur, sur la base de l'estimation de l'orientation de la tête de l'utilisateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par bloc illustrant un système comprenant un écran et un capteur à temps de vol, selon un mode de réalisation de la présente description ;
la figure 2 illustre le traitement de données acquises par le capteur à temps de vol afin d'estimer l'orientation de la tête d'un utilisateur du système, selon un mode réalisation de la présente description ;
la figure 3 illustre le calcul, pour chaque pixel du capteur à temps de vol, des données utilisées pour l'estimation de l'orientation de la tête de l'utilisateur ;
la figure 4 illustre des exemples d'applications mises en oeuvre suite l'estimation de l'orientation de la tête de l'utilisateur ;
la figure 5 est un organigramme illustrant des étapes d'un procédé de traitement de données acquises par un capteur à temps de vol ;
la figure 6A illustre un mode de réalisation d'un procédé d'estimation de l'attention d'un utilisateur du système, selon un mode réalisation de la présente description ;
la figure 6B illustre un autre mode de réalisation d'un procédé d'estimation de l'attention d'un utilisateur du système, selon un mode réalisation de la présente description ; et
la figure 6C illustre un autre mode de réalisation d'un procédé d'estimation de l'attention d'un utilisateur du système, selon un mode réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, le fonctionnement d'un capteur à temps de vol est connu par la personne du métier et n'est pas décrit en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

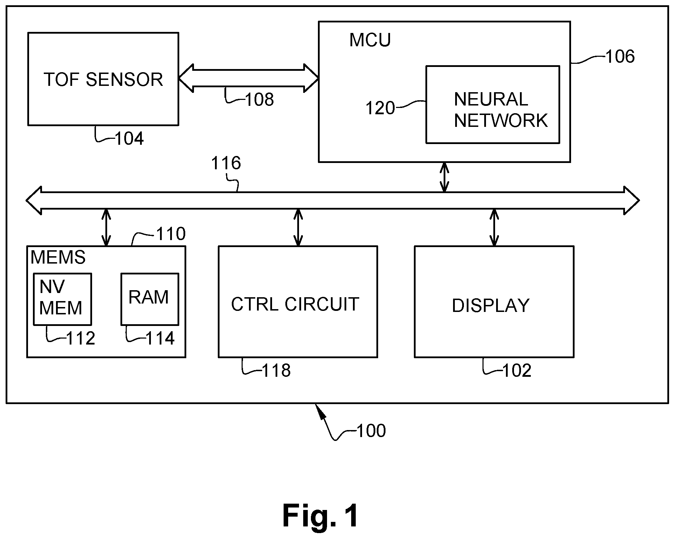

La figure 1 est un schéma par bloc illustrant un système 100 comprenant un écran (DISPLAY) 102 et un capteur à temps de vol (TOF SENSOR) 104, selon un mode de réalisation de la présente description.

A titre d'exemple, le système 100 représente un ordinateur portable, ou un ordinateur de bureau. Bien qu'un seul écran soit illustré en relation avec la figure 1, le système 100 peut comprendre plusieurs, par exemple, deux ou trois écrans. Dans d'autres exemples, le système 100 est un téléphone portable, une tablette, un écran publicitaire, un guichet automatique bancaire, et plus généralement tout système comprenant un écran et un capteur à temps de vol.

Le système 100 comprend en outre un microcontrôleur 106 (MCU) relié au capteur à temps de vol 104 par l'intermédiaire d'un bus 108. A titre d'exemple le bus 108 est un bus de type I2C (de l'anglais « Inter-Integrated Circuit »).

Le système 100 comprend, par exemple, en outre des mémoires 110 (MEM) comprenant par exemple une mémoire non volatile 112 (NV MEM) et/ou une mémoire volatile 114 (RAM). A titre d'exemple, la mémoire non volatile 112 est une mémoire de type Flash et la mémoire 114 est une mémoire volatile à accès aléatoire (de l'anglais « Random Accès Memory »). A titre d'exemple, les mémoires 110 sont reliées au microcontrôleur 106 par l'intermédiaire d'un bus 116.

A titre d'exemple, le système 100 comprend en outre un circuit de contrôle 118 (CTRL CIRCUIT), relié au bus 116, et configuré pour contrôler la luminosité de l'écran 102.

Selon un mode de réalisation, le microcontrôleur 106 comprend un réseau de neurones 120 (NEURAL NETWORK) . Le réseau de neurones 120 est configuré pour estimer, à partir de données acquises par le capteur à temps de vol 104, l'orientation de la tête d'un utilisateur du système 100, et en particulier de l'écran 102.

A titre d'exemple, suite à l'estimation de l'orientation de la tête de l'utilisateur, le microcontrôleur 106 commande le réglage de la luminosité de l'écran 102. A titre d'exemple, le réglage de la luminosité de l'écran 102 s'effectue par l'intermédiaire du circuit de contrôle 118.

A titre d'exemple, le microcontrôleur 106, et/ou le circuit de contrôle 118, est configuré pour faire baisser la luminosité de l'écran 102 lorsque l'estimation de l'orientation de la tête montre que l'utilisateur détourne le regard de l'écran 102. Lorsque les estimations montrent que l'utilisateur ne regarde pas en direction de l'écran 102, le microcontrôleur 106, et/ou le circuit de contrôle 118, est configuré pour laisser telle quelle, ou abaisser à nouveau, la luminosité de l'écran 102. Au contraire, lorsque les estimations montrent que l'utilisateur retourne son regard, ou revient vers l'écran 102, le microcontrôleur 106, et/ou le circuit de contrôle 118, est configuré pour faire augmenter la luminosité de l'écran 102. De même, lorsque les estimations montrent que l'utilisateur reste face à l'écran, le microcontrôleur 106, et/ou le circuit de contrôle 118, est configuré pour laisser la luminosité telle quelle.

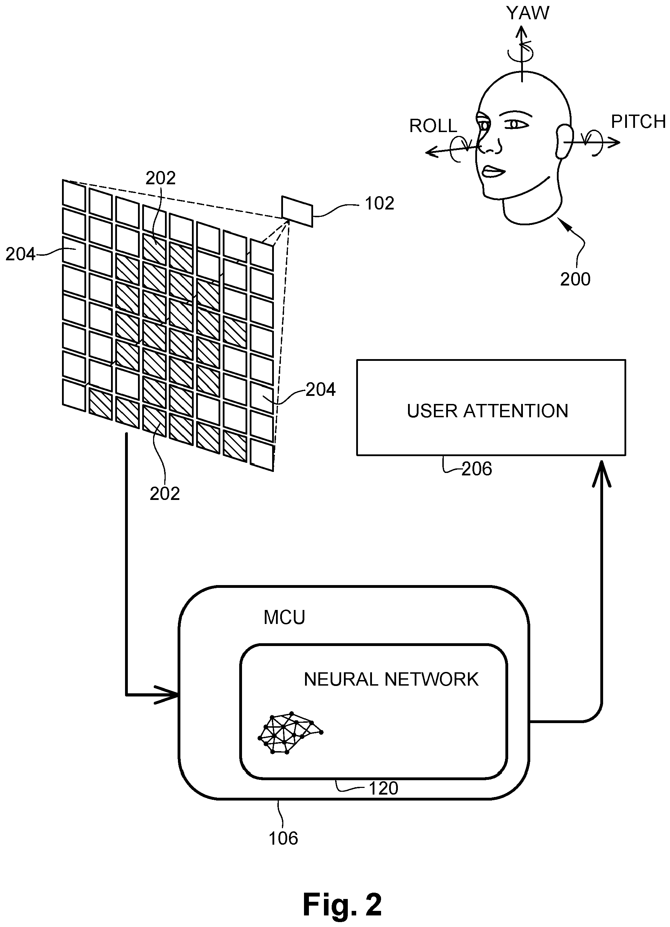

La figure 2 illustre le traitement de données acquises par le capteur à temps de vol 102 afin d'estimer l'orientation de la tête d'un utilisateur 200 du système 100, selon un mode réalisation de la présente description.

Selon un mode de réalisation, le capteur à temps de vol 104 comprend une pluralité de pixels. Dans l'exemple illustré en relation avec la figure 2, le capteur à temps de vol 104 comprend 64 pixels, disposés en un carré comprenant 8 pixels par côté.

L'utilisateur 200 est par exemple face au capteur à temps de vol 104. L'utilisateur 200 peut bouger la tête selon des mouvements de rotation autour des 3 axes x, y, z : une rotation autour de l'axe z (YAW) correspond à tourner la tête vers la droite ou vers la gauche. Une rotation autour de l'axe y (ROLL) correspond à pivoter la tête dans un plan parallèle à l'utilisateur 200, c'est à dire, à faire pivoter la tête vers une épaule sans la tourner vers la droite ou la gauche. Enfin, une rotation autour de l'axe x (PITCH) correspond à baisser la tête vers le sol ou la lever vers le ciel.

Lors d'une capture effectuée par le capteur 104, chaque pixel du capteur 104 mesure différentes informations. A titre d'exemple, les pixels du capteur 104 sont configurés pour mesurer entre autres une distance entre le capteur 104 et une cible face au capteur 104. La cible, telle que l'utilisateur 200, n'occupe pas forcément tout le champ mesuré par le capteur. Ainsi, des pixels 202 vont détecter l'utilisateur 200, par exemple lorsque la distance mesurée est une valeur finie, ou inférieure à une valeur seuil. D'autres pixels 204 ne vont pas détecter l'utilisateur 200 et sont par exemple associés à l'arrière-plan de la scène capturée.

Selon un mode de réalisation, suite aux mesures effectuées par chaque pixel, une valeur de statut est en outre générée pour chaque pixel. A titre d'exemple, la valeur de statut est une valeur booléenne prenant par exemple la valeur vrai (TRUE) lorsque la distance mesurée montre que l'utilisateur 200 a été détecté par le pixel. La valeur de statut prend par exemple la valeur faux (FALSE) lorsque les valeurs mesurées par le pixel sont aberrantes. A titre d'exemple, lorsque l'utilisateur 200 n'est pas détecté, la valeur FALSE est attribué au pixel.

Dans l'exemple illustré par la figure 2, les valeurs de statut des pixels 202 sont affectées à la valeur TRUE et les valeurs de statut des pixels 204 sont affectées à la valeur FALSE.

Dans un autre exemple la valeur de statut est une valeur appartenant à un intervalle, par exemple [0, 100]. La valeur de statut représente alors un indice de confiance du pixel.

Selon un mode de réalisation, les mesures effectuées par les pixels 202 sont transmises au microcontrôleur 106 et sont traitées par le réseau de neurones 120. Le microcontrôleur 106 est alors configuré pour générer, sur la base des mesures reçues, des estimations 206 (USER ATTENTION). Les estimations 206 comprennent une estimation, par le réseau de neurones 120, de l'orientation de la tête de l'utilisateur. A titre d'exemple, l'estimation de l'orientation prend la forme d'un angle ou d'une direction. Les estimations 206 comprennent par exemple une estimation, par le microcontrôleur 106, de l'attention de l'utilisateur. A titre d'exemple, l'estimation de l'attention est une valeur booléenne prenant la valeur FALSE lorsque l'utilisateur n'est pas attentif et la valeur TRUE lorsque l'utilisateur est attentif. Dans un autre exemple, l'estimation de l'attention de l'utilisateur est une valeur appartenant à un intervalle. A titre d'exemple, l'intervalle considéré est l'intervalle [0, 100], la valeur 0 indiquant que l'utilisateur n'est pas du tout attentif, et la valeur 100 indiquant que l'utilisateur est concentré sur l'écran 102. L'intervalle [0,100] est donné à titre d'exemple, et n'est bien sûr pas limitatif, d'autres intervalles ou mesures de l'attention de l'utilisateur peuvent être envisagés. L'attention de l'utilisateur est par exemple estimée sur la base de l'orientation de la tête de l'utilisateur, estimée par le réseau de neurones 120.

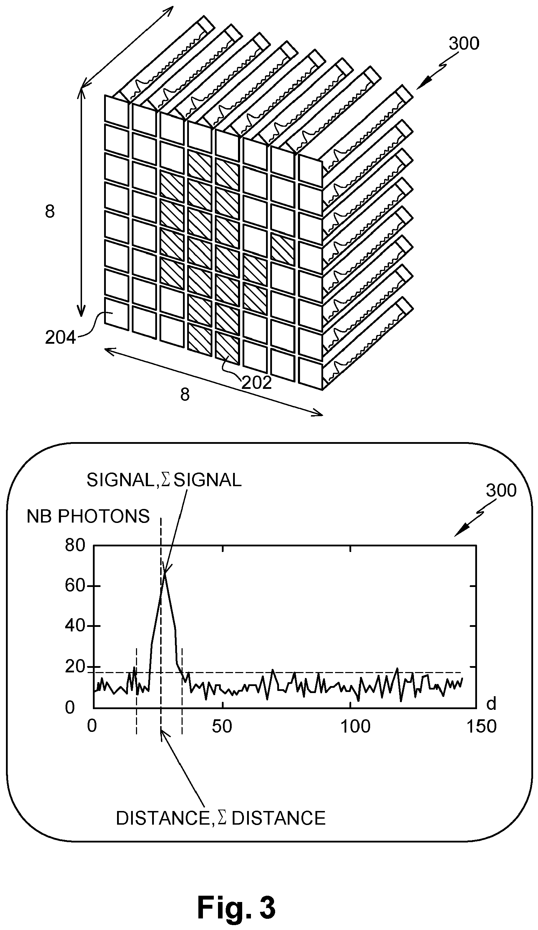

La figure 3 illustre le calcul, pour chaque pixel du capteur à temps de vol 104, des données utilisées pour l'estimation de l'orientation de la tête de l'utilisateur. A titre d'exemple, les données utilisées sont calculées directement par le capteur 104, sur la base des mesures effectuées par les pixels.

Le capteur à temps de vol 104 est configuré pour émettre des impulsions lumineuses, généralement dans le domaine des infrarouges, vers une scène. Pour chaque impulsion, la lumière réfléchie par des objets, ici par l'utilisateur 200 du système 100, situés dans la scène est détectée, par chaque pixel. A titre d'exemple chaque pixel comprend un ou plusieurs éléments sensibles à la lumière configurés pour détecter la lumière réfléchie. A titre d'exemple, les éléments sensibles à la lumière sont des diodes à avalanche à photon unique (de l'anglais « Single Photon Avalanche Diode »- SPAD). De manière générale, pour obtenir un rapport signal sur bruit acceptable, chaque pixel du capteur à temps de vol 104 est configuré pour accumuler le signal généré par le ou les éléments photosensibles pendant une séquence de plusieurs milliers d'impulsions lumineuses, émises par le capteur 104. Une distance (DISTANCE), en mm, entre l'utilisateur 200 et le capteur 104 est alors déduite à partir d'un temps moyen de la séquence d'impulsion.

Un graphique 300 illustre, pour un pixel du capteur 104, l'accumulation des signaux générés par le ou les éléments photosensibles pendant une séquence de plusieurs milliers d'impulsions lumineuses. Un axe d représente les distances mesurées lors de chaque flux et un axe NB PHOTONS représente le nombre de photons étant revenus par seconde. Une valeur de signal (SIGNAL) correspond au nombre moyen dde photon revenant vers le pixel par seconde.

Selon un mode de réalisation, chaque pixel est en outre configuré pour calculer un écart-type associé à la distance (Σ DISTANCE) et un écart-type associé au signal (Σ SIGNAL).

A titre d'exemple, chaque pixel est en outre configuré pour mesurer une valeur de réflectance. A titre d'exemple, la valeur de réflectance est un pourcentage calculé sur la base du nombre de photons renvoyés par la cible et sur la base de la distance à la cible estimée. A titre d'exemple, la peau humaine, quelle que soit sa couleur, a une réflectance d'environ 60%. A titre d'exemple, les cheveux ont pour réflectance au moins 10%, dépendant de leur couleur.

A titre d'exemple, les valeurs de réflectance des pixels ayant pour valeur de statut la valeur TRUE, ou ayant une valeur supérieure à la valeur seuil, sont transmises au microcontrôleur 106.

Selon un mode de réalisation, le capteur 104 est configuré pour transmettre au microcontrôleur 106 les valeurs de distance, de signal, d'écart-type de distance et d'écart-type de signal des pixels et les valeurs de statut, pour chaque pixel. A titre d'exemple, lorsque que la valeur de statut associé à un pixel est égale à la valeur FALSE, le microcontrôleur 106 ignore les autres valeurs associées à ce pixel. Le pixel en question est, par exemple, traité par le microcontrôleur 106 comme étant un pixel invalide. Dans l'exemple où la valeur de statut appartient à un intervalle, les mesures des pixels ayant pour valeur de statut une valeur inférieure à une valeur seuil sont par exemple ignorées par microcontrôleur 106.

A titre d'exemple, les mesures de distance, signal, d'écarts-type et de réflectance des pixels invalides sont automatiquement affectées, par le microcontrôleur 106, à des valeurs par défaut, par exemple à 0, ou à une valeur n'étant pas un nombre (en anglais « Not A Number » - NaN).

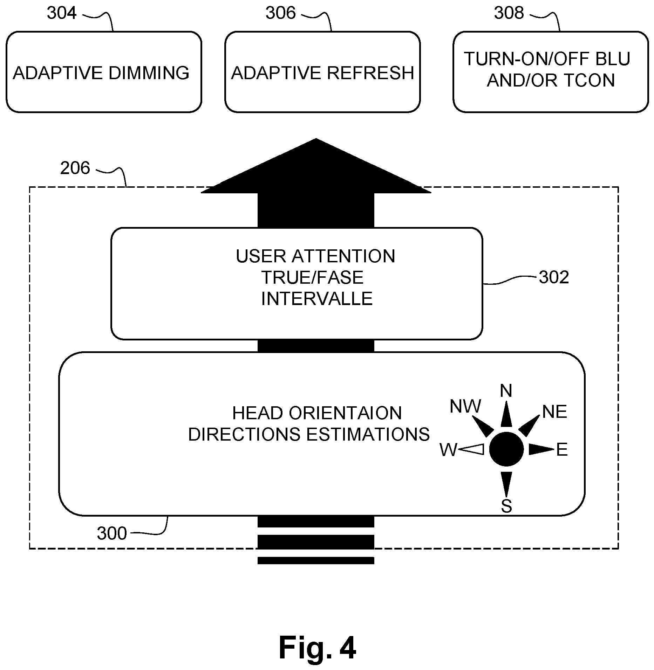

La figure 4 illustre des exemples d'applications mises en oeuvre suite au traitement des données.

A titre d'exemple, les estimations 206, comprenant une estimation 300 (HEAD ORIENTATION DIRECTIONS ESTIMATIONS) de l'orientation de la tête de l'utilisateur 200 et une estimation 302 (USER ATTENTION TRUE/FALSE INTERVALLE) de l'attention de l'utilisateur 200, sont utilisées, par exemple par le microcontrôleur 106 ou par un autre processeur (non illustré en figure 1), pour la mise en oeuvre d'une ou plusieurs applications 304 (ADAPTIVE DIMMING), 306 (ADAPTIVE REFRESH) et/ou 308 (TURN-ON/OFF TBLU AND/OR TCON).

A titre d'exemple, l'estimation 300 de l'orientation de la tête de l'utilisateur prend par exemple la forme d'une direction parmi les directions nord (N), nord-est (NE), nord-ouest (NW), est (E), ouest (W) et sud (S). La direction nord indique par exemple que l'utilisateur est face à l'écran 102. Les directions est et ouest indiquent par exemple, respectivement, que l'utilisateur regarde à 90° vers la droite et la gauche de l'écran 102. La direction sud indique par exemple que l'utilisateur est dos à l'écran 102.

La mise en oeuvre de l'application 304 permet le réglage de la luminosité de l'écran 102 en fonction de l'attention et de l'orientation de la tête de l'utilisateur. A titre d'exemple, la mémoire 112 comprend des instructions permettant la mise en oeuvre de l'application 304.

La mise en oeuvre de l'application 306 permet par exemple de ralentir, ou d'accélérer, le taux de rafraîchissement de l'écran 102 en fonction des estimations 206. A titre d'exemple, lorsqu'il est estimé que l'utilisateur n'est pas face à l'écran 102, le taux de rafraîchissement de l'écran est plus faible que lorsqu'il est estimé que l'utilisateur est face à l'écran.

La mise en oeuvre de l'application 308 permet par exemple l'activation, ou la désactivation de circuits périphériques (non illustrés en figure 1) au système 100. A titre d'exemple, lorsque les estimations 206 montrent que l'utilisateur n'est pas face à l'écran et/ou n'est pas attentif, des circuits périphériques sont désactivés. Les circuits sont alors réactivés lors que les estimations montrent que l'utilisateur revient face à l'écran 102 et/ou redevient attentif. A titre d'exemple, les circuits périphériques comprennent une carte T-CON (de l'anglais « Timing Control Board ») et/ou une unité de rétro-éclairage BLU (de l'anglais « Back Light Unit »).

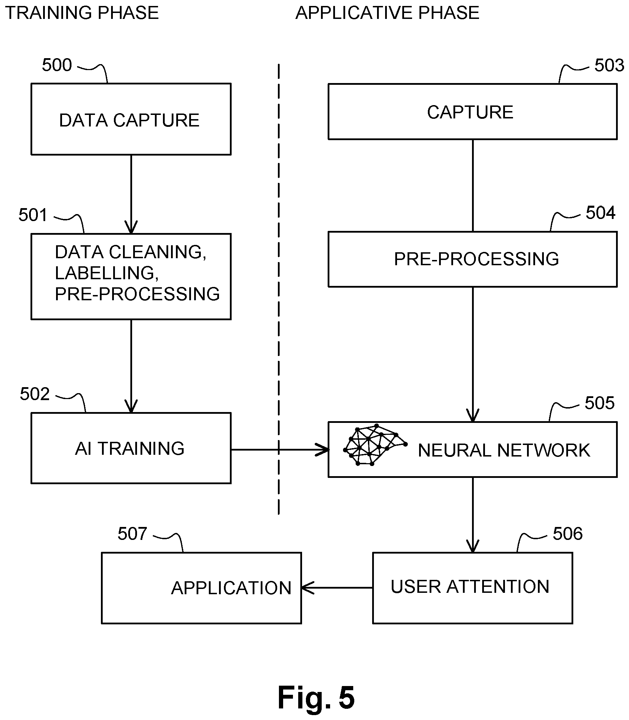

La figure 5 est un organigramme illustrant des étapes d'un procédé de traitement de données acquises par un capteur à temps de vol.

En particulier, l'organigramme décrit en relation avec la figure 5 comprend deux phases. Une phase d'entrainement (TRAINING PHASE) comprend la construction du réseau de neurones 120 et son entrainement. La phase d'entrainement est par exemple réalisée en amont de la fabrication du système 100. La phase d'entrainement comprend par exemple des étapes 500 à 502. Une phase applicative (APPLICATIVE PHASE) comprend la mise en application du réseau de neurones 120 par le système 100. A titre d'exemple, la phase applicative comprend des étapes 503 à 507.

L'étape 500 (DATA CAPTURE) de la phase d'entrainement comprend l'acquisition d'une pluralité de captures par un ou plusieurs capteurs à temps de vol semblables au capteur 104. L'acquisition d'une pluralité de captures comprend la capture par l'un ou plusieurs capteurs d'une pluralité de scènes image. Les scènes capturées comprennent par exemple un utilisateur d'un écran, les capteurs utilisés étant par exemple intégré à l'écran en question.

Chaque capture comprend la mesure, par chaque pixel, de la distance, du signal, ainsi que des écarts-type associés à la distance et au signal. A titre d'exemple, chaque capture comprend en outre la mesure, par chaque pixel, de la réflectance.

Dans une étape 501 (DATA CLEANING, LABELLING, PRE-PROCESSING), les captures effectuées dans l'étape 500 sont par exemple prétraitées. A titre d'exemple, l'étape 501 comprend une étape de nettoyage. Le nettoyage des captures comprend par exemple la suppression de toutes les captures où aucun, ou plusieurs, utilisateurs apparaissent. A titre d'exemple, le nettoyage comprend en outre la suppression des captures comprenant des valeurs NaN pour l'une ou plusieurs des mesures effectuées. L'étape 501 comprend par exemple en outre une étape d'étiquetage. A titre d'exemple, l'étape d'étiquetage comprend l'association de chacune des captures, non supprimée lors du nettoyage, avec une direction parmi les directions nord, nord-est, nord-ouest, est, ouest et sud. L'étape 501 comprend par exemple en outre une étape d'équilibrage, dans laquelle le nombre de captures affectées à chaque direction est équilibré. Autrement dit, la réalisation de l'équilibrage permet d'avoir un nombre de captures similaire en association avec chaque direction.

Dans une étape 502 (AI TRAINING), une architecture de réseau de neurones est recherchée. A titre d'exemple cette étape est réalisée, par exemple, par ordinateur et par l'intermédiaire d'un outil de recherche d'architecture.

Suite à la sélection d'un réseau de neurones, l'étape 502 comprend en outre, l'entrainement du réseau de neurones, par exemple par ordinateur et par l'intermédiaire d'un outil de calcul, ou de l'outil de recherche d'architecture. L'entrainement du réseau de neurones sélectionné permet d'optimiser les paramètres intervenant dans le réseau, tels que des poids synaptiques pour des couches denses, un nombre de filtres pour une couche de convolution, etc. Le réseau de neurones sélectionné et entraîné est alors le réseau de neurones 120.

Le réseau de neurones 120 est ensuite implémenté, par exemple, dans le microcontrôleur 106 du système 100.

A titre d'exemple, le réseau de neurones 120 comprend une couche d'entrée configurée pour recevoir des données d'entrée. Les données d'entrée sont par exemple, en association avec chaque pixel du capteur 104, les au moins 4 mesures : distance, signal, et des écarts-type associés à la distance et au signal. A titre d'exemple, les mesures de réflectance sont aussi transmises au réseau de neurones 120. Dans un autre exemple, les valeurs de statut sont aussi transmises au réseau de neurones 120. Le nombre de données d'entrées est alors égal au nombre de pixels du capteur 104 multiplié par le nombre de mesures effectuées par chaque pixel. Les valeurs associées aux pixels invalides ont été affectées, par le microcontrôleur 106, à des valeurs par défaut, telles que des valeurs nulles où des valeurs n'étant pas un nombre. Le réseau de neurones 120 comprend par exemple en outre, suite à la couche d'entrée, deux couches de convolution. A titre d'exemple, la première couche de convolution comprend un nombre de filtres égal au nombre de mesures transmise par chaque pixel. A titre d'exemple, la deuxième couche de convolution comprend 2 filtres. Le réseau de neurones 120 comprend en outre, suite aux couches de convolution, une couche d'aplatissement (en anglais « flattening layer »). A titre d'exemple, lors de l'étape 502, une couche dite de dropout et/ou une couche de bruit gaussien sont ajoutées afin de réduire le sur-apprentissage du réseau de neurones 120.

A titre d'exemple, le réseau de neurones 120 comprend en outre deux couches denses. La première couche dense a par exemple un nombre de neurones égal au nombre de neurones de sortie de la deuxième couche de convolution. La deuxième couche dense a par exemple un nombre de neurones égal au nombre de directions pouvant prendre la tête de l'utilisateur. A titre d'exemple, la deuxième couche dense comprend 6 neurones. Le réseau de neurones 120 est configuré pour générer, pour chacune des directions parmi nord, nord-est, nord-ouest, est, ouest et sud, une probabilité d'appartenance, sur la base des données d'entrées. La direction la plus probable est alors l'estimation de la direction de la tête de l'utilisateur.

L'exemple donnée du réseau de neurones 120 n'est, bien sûr, pas limitatif et d'autres architectures peuvent, bien sûr, être implémentée. Néanmoins, dans le cas où le capteur 104 comprend un nombre réduit de pixel, par exemple lorsque le capteur comprend moins d'une centaine de pixels, il est souhaitable que le réseau de neurones 120 soit de petite taille. A titre d'exemple, le réseau de neurones 120 comprend moins d'une dizaine de couches. En effet, un réseau de neurones 120 de petite taille permet de contribuer à l'économie d'énergie du système 100, et particulièrement lorsque l'écran 102 est à faible luminosité et que l'utilisateur n'est pas face à l'écran 102.

Suite à l'implémentation du réseau de neurones 120 dans le microcontrôleur 106, et durant le fonctionnement du système 100, une étape 503 (CAPTURE) de la phase applicative comprend une capture par le capteur 104 décrite en relation avec la figure 3. Les mesures réalisées lors de la capture sont, par exemple, transmises au microcontrôleur 106.

Dans une étape 504 (PRE-PROCESSING), le microcontrôleur 106 effectue un traitement des mesures reçues. A titre d'exemple, le traitement comprend l'identification des pixels 202 détectant l'utilisateur de l'écran 102. A titre d'exemple, des pixels ayant pour valeur de statut TRUE mais n'étant pas identifiés comme détectant l'utilisateur de l'écran 102 ont leur valeur de statut réaffectée à la valeur FALSE. Les mesures effectuées pour ces pixels sont alors remplacées par les valeurs par défaut. L'étape 504 comprend par exemple en outre la normalisation des mesures. A titre d'exemple, les valeurs de distances sont normalisées afin d'appartenir à un intervalle, par exemple à l'intervalle [-1,1].

Dans une étape 505, les mesures des pixels sont fournies comme données d'entrée au réseau de neurones 120. A titre d'exemple, ces mesures ont été renormalisées lors de la réalisation de l'étape 504. A titre d'exemple, les valeurs associés aux pixels invalides sont des valeurs par défaut. Le réseau de neurones 120 est alors configuré pour, sur la base des données d'entrée fournies, estimer l'orientation de la tête de l'utilisateur de l'écran 102, par exemple parmi les directions nord, nord-est, nord-ouest, est, ouest ou sud.

Dans une étape 506 (USER ATTENTION), la valeur d'attention est calculée, par exemple par le microcontrôleur 106, sur la base de l'orientation de la tête de l'utilisateur. A titre d'exemple, le capteur 104 est configuré pour effectuer plusieurs mesures, à des instants qui sont distants les uns par rapport aux autres d'un intervalle de temps régulier, ou d'un intervalle de temps dépendant des estimations effectuées par le réseau de neurones 120. En association à chaque instant, le réseau de neurones 120 estime l'orientation de la tête de l'utilisateur et cette estimation est par exemple stockée dans une mémoire volatile. La valeur d'attention de l'utilisateur à un instant donné est, par exemple, en outre calculée sur la base d'au moins deux estimations de l'orientation de la tête de l'utilisateur pour des instants antérieurs.

Dans une étape 507 (APPLICATION), l'estimation de l'orientation de la tête de l'utilisateur 200 et la valeur d'attention sont par exemple utilisées, par le microcontrôleur 106, ou par un autre processeur, pour la mise en oeuvre d'une ou plusieurs applications telles que par exemple les applications 304 et/ou 306 et/ou 308.

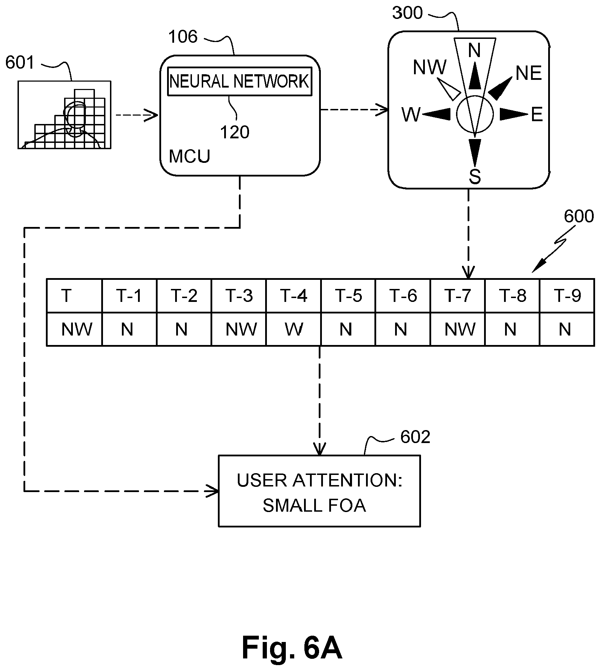

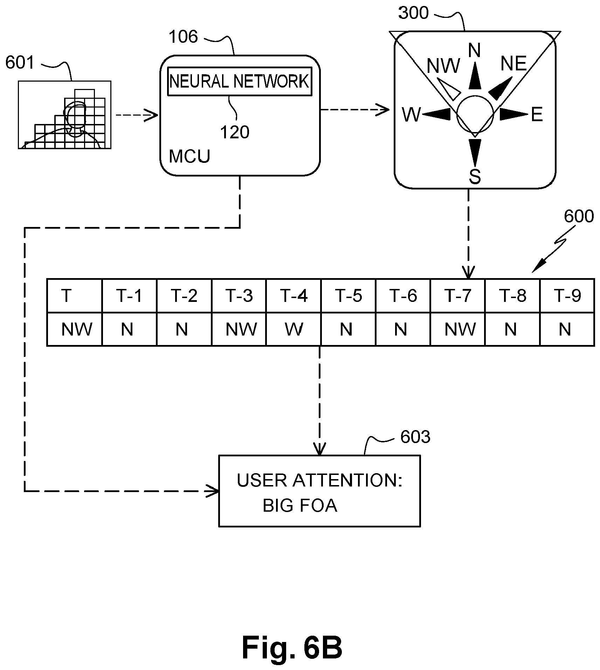

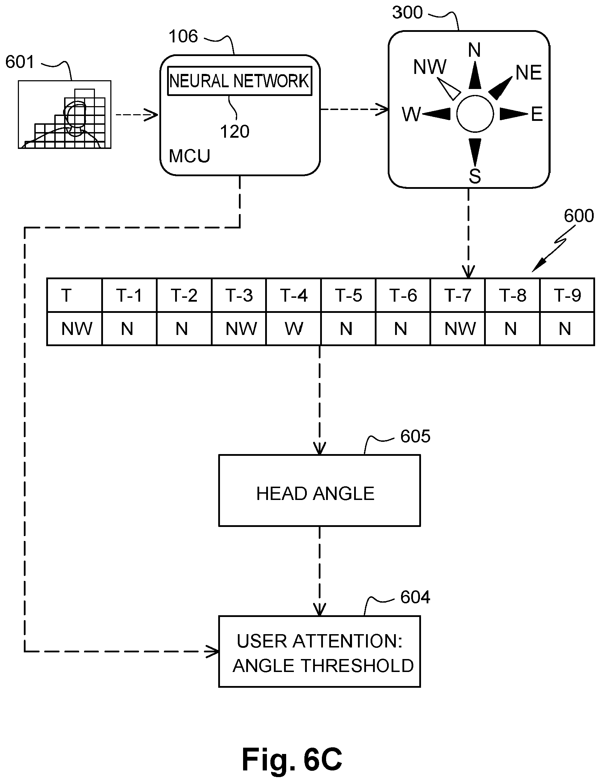

Les figures 6A, 6B et 6C illustrent des modes de réalisation d'un procédé d'estimation de l'attention d'un utilisateur du système, selon un mode réalisation de la présente description.

A titre d'exemple, le système comprend une mémoire volatile, telle que par exemple un buffer circulaire ou une mémoire premier entré, premier sorti (en anglais « First In, first out » - FIFO) . A titre d'exemple, la mémoire volatile est comprise dans le microcontrôleur 106. Dans un autre exemple, la mémoire volatile est comprise dans les mémoires 110. A chaque estimation d'une direction, par le réseau de neurones 120, la mémoire volatile est configurée pour stocker cette direction. Ainsi, à chaque nouvelle estimation de direction, par le réseau de neurones 120, la mémoire volatile est configurée pour supprimer la direction la moins récente, et pour stocker la nouvelle direction. Les directions stockées par la mémoire volatile sont donc issues de captures, par le capteur 104, consécutives. A titre d'exemple, la mémoire volatile est configurée pour stocker un nombre n de directions, par exemple 10 directions. La taille de la mémoire volatile peut bien sûr varier, et celle-ci peut stocker un nombre supérieur à 10 d'estimations de directions consécutives, ou un nombre inférieur à 10 d'estimations de directions consécutives.

Dans les exemples illustrés par les figures 6A, 6B et 6C, la mémoire volatile est représentée par un tableau 600. Le tableau 600 comprend 10 estimations de directions consécutives, générées par le réseau de neurones 120. A titre d'exemple, les 10 directions estimées ont été réalisée à partir de captures d'une scène image 601, par le capteur 104, réalisées à des temps consécutifs T-9 à T. Dans l'exemple illustré par les figures 6A, 6B et 6C, la direction estimée pour l'instant T est la direction nord-ouest, la direction pour l'instant T-1 est la direction nord, etc.

A titre d'exemple, la valeur d'attention est une valeur appartenant à un intervalle, par exemple à l'intervalle [0,100]. L'intervalle [0,100] est donné à titre d'exemple, et tout autre intervalle peut être considéré, tel que par exemple un intervalle de la forme [0,1], [-1,1] etc. De manière générale, l'intervalle de confiance est caractérisé par une valeur minimale et une valeur maximale.

Dans un premier mode de réalisation 602 (USER ATTENTION: SMALL FOA), illustré par la figure 6A, la valeur d'attention est mise à la valeur maximale lorsque la présence de l'utilisateur de l'écran 102 est détectée et qu'au moins une parmi les conditions suivantes est remplie :
- la direction nord a été estimée pour les instants T et T-1 ; ou
- la direction nord a été estimée au moins six fois parmi les estimations pour les temps T-9 à T ; ou
- la distance entre l'utilisateur 200 et l'écran 102, mesurée par le capteur 104 est inférieure à une distance de référence, la valeur de la distance de référence étant par exemple inférieure à 500mm. A titre d'exemple, la valeur de la distance de référence est égale à 320mm. A titre d'exemple, la présence de l'utilisateur est détectée par l'application d'un algorithme de détection, tel que par exemple un algorithme de détection d'humain versus objet (en anglais « Human vs Object Détection » - HOD).

Lorsqu'aucune des conditions ci-dessus n'est vérifiée, la valeur d'attention décroit progressivement. A titre d'exemple la valeur d'attention décroit de la valeur maximale à la valeur minimale en un laps de temps de référence. A titre d'exemple le laps de temps de référence est de l'ordre de quelques secondes, par exemple entre 2 et 3 secondes.

Dans un deuxième mode de réalisation 603 (USER ATTENTION: BIG FOA), illustré par la figure 6B, la valeur d'attention est mise à la valeur maximale lorsque la présence de l'utilisateur de l'écran 102 est détectée, par exemple suite à l'application d'un algorithme de type HOD, et qu'au moins une parmi les conditions suivantes est remplie :
- la direction nord a été estimée pour les instants T et T-1 ; ou
- la somme des directions nord, nord-ouest et nord-est parmi les estimations pour les temps T-9 à T est au moins égale à 8 ; ou
- la distance entre l'utilisateur et l'écran 102, mesurée par le capteur 104 est inférieure à une distance de référence, la valeur de la distance de référence étant par exemple inférieure à 500mm. A titre d'exemple, la valeur de la distance de référence est égale à 320mm.

Lorsqu'aucune des conditions ci-dessus n'est vérifiée, la valeur d'attention décroit progressivement. A titre d'exemple la valeur d'attention décroit de la valeur maximale à la valeur minimale en un laps de temps de référence. A titre d'exemple le laps temps de référence est de l'ordre de quelques secondes, par exemple entre 2 et 3 secondes.

Dans un troisième mode de réalisation 604 (USER ATTENTION: ANGLE THRESHOLD), illustré par la figure 6C, les directions stockées dans la mémoire volatile 600 sont utilisées pour calculer un angle 605 (HEAD ANGLE). A titre d'exemple, l'angle calculé est un angle entre -180° et 180° et correspond à une moyenne de toutes les directions stockées dans la mémoire volatile. A titre d'exemple, chaque direction est traduite en un angle, par exemple la direction nord correspond à un angle de 0°, les directions nord-est et nord-ouest correspondent respectivement à un angle de -45° et 45°. Les directions est et ouest correspondent respectivement à un angle de -90° et 90°. La direction sud correspond par exemple à l'angle 180°, ou à l'angle -180°.

La valeur d'attention est alors mise à la valeur maximale lorsque la présence de l'utilisateur de l'écran 102 est détectée, par exemple suite à l'application d'un algorithme de type HOD, et qu'au moins une parmi les conditions suivantes est remplie :
- l'angle calculé appartient à un intervalle de référence. L'intervalle de référence étant par exemple un intervalle symétrique, de la forme [-Θ,Θ] ou Θ est un angle, inférieur à 180°, Dans un exemple, Θ est inférieur à 90°, ou à 45°. Dans un autre exemple, l'angle Θ est plus petit et est, par exemple, inférieur à 30° ou même à 20°; ou
- la distance entre l'utilisateur et l'écran 102, mesurée par le capteur 104 est inférieure à une distance de référence, la valeur de la distance de référence étant par exemple inférieure à 500m. A titre d'exemple, la valeur de la distance de référence est égale à 320mm.

Lorsqu'aucune des conditions ci-dessus n'est vérifiée, la valeur d'attention décroit progressivement. A titre d'exemple la valeur d'attention décroit de la valeur maximale à la valeur minimale en un laps temps de référence. A titre d'exemple le laps de temps de référence est de l'ordre de quelques secondes, par exemple entre 2 et 3 secondes.

A titre d'exemple, dans les modes de réalisation décrit en relation avec les figures 6A, 6B et 6C, la luminosité de l'écran décroit progressivement avec la valeur d'attention. A titre d'exemple, l'écran 102 est mis en veille lorsque la valeur d'attention atteint la valeur minimale.

Un avantage des modes de réalisation décrits est que l'estimation de l'orientation de la tête de l'utilisateur est effectuée sur la base de mesures effectuées par un capteur à temps de vol, beaucoup moins consommateur en énergie qu'une caméra. De plus, l'utilisation du capteur à temps de vol permet de garantir la confidentialité de l'utilisateur.

Un autre avantage des modes de réalisation d'écrits est qu'en utilisant un capteur à temps de vol, le réseau de neurones configuré pour le traitement des données est de taille extrêmement faible, par exemple moins d'une dizaine de couches et moins de 100 000 paramètres permettant ainsi de ne pas utiliser trop de ressources énergétiques.

Un autre avantage des modes de réalisation décrits est que les estimations sont effectuées, entre autres, sur la base d'une mesure de distance, ce qui permet d'obtenir, pour un nombre de pixels relativement faible par rapport à la résolution d'une image provenant d'une caméra, des estimations de fiabilité similaire à celles obtenues sur la base d'images obtenues par une caméra.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, pour ce qui est de l'adaptation, en fonction des estimations effectuées par le réseau de neurones, de la luminosité de l'écran peut varier. De même le calcul de l'attention de l'utilisateur et son usage peuvent varier. De plus, le système peut comprendre plusieurs écrans. Dans ce cas un écran de référence est un écran que l'utilisateur regarde la majorité du temps. L'écran de référence ne comprend pas nécessairement le capteur à temps de vol configuré pour effectuer les captures. La personne du métier saura calibrer le capteur afin que les estimations effectuées par le réseau de neurones correspondent à l'orientation de la tête de l'utilisateur par rapport à l'écran de référence. De même, lorsque le système comprend plusieurs écrans, l'utilisateur peut regarder un autre écran que l'écran de référence sans que cela signifie qu'il n'est pas attentif. La personne du métier saura adapter le contrôle de la luminosité et/ou la mise en oeuvre d'application telles que par exemple les applications décrites en relation avec la figure 3 à la configuration du système.

## Revendications

1. Système comprenant :
- un microcontrôleur (106) comprenant un réseau de neurones (120) ;
- un capteur à temps de vol (104), relié au microcontrôleur, configuré pour effectuer une première capture d'une scène image comprenant un utilisateur (200), le capteur comprenant une pluralité de pixels, la première capture comprenant la mesure, par chaque pixel d'une distance à l'utilisateur (200) du système et d'une valeur de signal correspondant à un nombre de photon revenant vers le capteur par unité de temps, le capteur étant en outre configuré pour, suite à la première capture et pour chaque pixel, calculer une valeur d'écart type associé à la valeur de distance et une valeur d'écart-type associé à la valeur de signal et une valeur de confiance, le capteur étant en outre configuré pour fournir, en association à chaque pixel, les valeurs de distance, de signal, d'écarts-type associés à la distance et au signal et la valeur de confiance au réseau de neurones,
le réseau de neurones étant configuré pour générer, sur la base des valeurs fournies par le capteur, une estimation d'une direction associée à l'utilisateur, le système comprenant en outre un écran (102), relié au microcontrôleur, le microcontrôleur étant configuré pour contrôler l'écran, ou un autre circuit relié au microcontrôleur, sur la base de l'estimation de la direction associée à l'utilisateur.

2. Système selon la revendication 1, dans lequel le microcontrôleur (106) est en outre configuré pour générer une valeur d'attention associée à l'utilisateur (200), et dans lequel le microcontrôleur est configuré pour contrôler la luminosité de l'écran (102) en outre sur la base de la valeur d'attention.

3. Système selon la revendication 1 ou 2, dans lequel chaque pixel du capteur (104) est en outre configuré pour mesurer une valeur de réflectance et dans lequel le réseau de neurones (120) est configuré pour générer l'estimation de la direction en outre sur la base des valeurs de réflectance.

4. Système selon l'une quelconque des revendications 1 à 3, comprenant en outre une mémoire (110) comprenant un programme applicatif et dans lequel le microcontrôleur (106) est en outre configuré pour commander l'exécution du programme applicatif sur la base de l'estimation de la direction générée par le réseau de neurones (120).

5. Système selon l'une quelconque des revendications 1 à 4, comprenant en outre une unité de rétro-éclairage (BLU-« Back Light Unit »), et dans lequel le microcontrôleur (106) est configuré pour désactiver l'unité de rétro-éclairage, sur la base de l'estimation de la direction.

6. Système selon l'une quelconque des revendications 1 à 5, dans lequel le microcontrôleur (106) est configuré pour contrôler un taux de rafraîchissement de l'écran (102) sur la base de l'estimation de la direction.

7. Système selon l'une quelconque des revendications 1 à 6, dans lequel le capteur (104) est configuré pour effectuer, suite à la première capture, une deuxième capture, l'intervalle de temps entre les premières et deuxième capture étant déterminé par l'estimation de la direction générée par le réseau de neurones (120) et/ou sur la base de la valeur d'attention calculée suite à la première capture.

8. Système selon l'une quelconque des revendications 1 à 7, dans lequel le capteur (104) est un capteur de 8x8 pixels.

9. Système selon l'une quelconque des revendications 1 à 8, comprenant en outre au moins un autre écran, le microcontrôleur étant en outre configuré pour contrôler la luminosité de l'au moins autre écran sur la base de l'estimation d'une direction associée à l'utilisateur.

10. Système selon la revendication 9, dans lequel la direction estimée indique une direction, décrivant l'orientation de la tête de l'utilisateur (200), parmi les direction nord, nord-est, nord-ouest, est, ouest et sud, la direction nord indiquant que l'utilisateur (200) est face à l'écran (102) et la direction sud indiquant que l'utilisateur est dos à l'écran.

11. Système selon la revendication 10, dans lequel le microcontrôleur (106) est configuré pour commander la diminution de la luminosité de l'écran lorsque entre au moins deux captures successives, la direction estimée passe :
- de nord à nord-ouest ou à nord-est ; et/ou
- de nord à sud ; et/ou
- de nord-ouest ou nord-est à sud,
et dans lequel le microcontrôleur est configuré pour commander l'augmentation de la luminosité de l'écran lorsque entre au moins deux captures successives, la direction estimée passe :
- de sud à nord ; et/ou
- de sud à nord-ouest ou de sud à nord-est ; et ou
- de nord-ouest ou nord-est à nord.

12. Système selon l'une quelconque des revendications 1 à 11, dans lequel la valeur de confiance est une valeur booléenne indiquant si les mesures effectuées par le pixel permettent de détecter l'utilisateur (200), le capteur (104) est configuré pour ne pas fournir les mesures prise par un pixel (204) ne détectant pas l'utilisateur au réseau de neurones (120).

13. Système selon l'une quelconque des revendications 1 à 12, dans lequel le réseau de neurones (120) comprend :
- au moins une couche de convolution ; et
- au moins une couche dense.

14. Procédé d'apprentissage d'un réseau de neurones (120) comprenant :
- la capture, par un capteur à temps de vol d'une pluralité de scène image comprenant un utilisateur (200) d'un écran, chaque pixel mesurant une valeur de distance à l'utilisateur, une valeur de signal et étant configuré pour calculer un écart type associé à la valeur de distance et un écart-type associé à la valeur de signal ;
- la suppression, par un processeur, dans les images capturés, d'images aberrantes ;
- la classification, par le processeur, de chaque image non supprimée, dans une classe parmi les classes nord, nord-ouest, nord-est, ouest, est et sud ;
- l'équilibrage, par le processeur, du nombre d'images répartie dans chaque classe ;
- la sélection, par le processeur, d'une architecture d'un réseau de neurones ; et
- l'entrainement du réseau de neurones sur la base des image capturées et classifiées et sur la base des valeurs mesurées pour chaque pixel des images, l'entrainement comprenant la recherche de paramètres pour le réseau de neurones sélectionné.

15. Procédé comprenant :
- la capture, par un capteur à temps de vol (104), d'une scène image comprenant un utilisateur d'un écran (102), la capture comprenant la mesure, par chaque pixel du capteur, d'une valeur de distance, d'une valeur de signal et de valeurs d'écarts-type associées à la valeur de distance et à la valeur de signal, le capteur étant en outre configuré pour générer, pour chaque pixel, un valeur de confiance ;
- la fourniture, par le capteur (104), à un microcontrôleur (106) des mesures effectuées par les pixels, le microcontrôleur comprenant un réseau de neurones configuré pour estimer, sur la base des mesures fournies, une direction décrivant l'orientation de la tête de l'utilisateur ;
- le contrôle, par le microcontrôleur (106) de l'écran ou d'un autre circuit relié au microcontrôleur, sur la base de l'estimation de l'orientation de la tête de l'utilisateur.
